# EUROPEAN PATENT SPECIFICATION

(11) **EP 0 601 572 B1**
(45) Date of publication and mention of the grant of the patent: **15.10.1997**
(21) Application number: 93119814.7
(22) Date of filing: 08.12.1993
(51) Int. Cl.: C08F 4/38, C08F 212/04, C08F 8/00, B01J 39/20

(54) **Method for producing a spherical ion exchange resin**
Verfahren zur Herstellung eines kugelförmigen Ionen-Austauscherharzes
Procédé de préparation d'une résine sphérique échangeuse d'ion

(30) Priority: 10.12.1992 JP 330467/92
(43) Date of publication of application: 15.06.1994
(73) Proprietor: Mitsubishi Chemical Corporation, Chiyoda-ku Tokyo (JP)
(72) Inventor: Ito, Tsuyoshi, Machida-shi, Tokyo (JP); Watanabe, Junya, Setagaya-ku, Tokyo (JP); Sugawara, Toyokazu, Sagamihara-shi, Kanagawa-ken (JP)
(74) Representative: TER MEER STEINMEISTER & PARTNER GbR

(56) References cited:
- EP-A- 0 501 288
- US-A- 4 283 499

## Description

The present invention relates to a method for producing an ion exchange resin and a spherical crosslinked copolymer as the base material for the ion exchange resin. Particularly, the present invention relates to an ion exchange resin which is spherical and excellent in the physical and mechanical strength.

Ion exchange resins are widely used in various industrial fields including a field of water treatment. For example, spherical ion exchange resins are commonly used, for example, in a field of water treatment such as demineralization of water for boilers or condensate treatment at power plants, in a food field such as purification of a sugar solution or purification of an amino acid, in a pharmaceutical field such as purification of an antibiotic, in a field of super pure water for preparation of semiconductors, or in an analytical filed such as chromatography.

For the production of spherical ion exchange resins, suspension polymerization has been used (see Hojo et al., "Ion Exchange Resins·Chelate Resins", p. 127-206 and a section entitled "Synthetic Ion Exchange Resins" at page 189 of "Ion Exchangers" compiled by Konrad Dorfner and published in 1990 by WALTER de Gruyter & Co.).

According to such a method, a monomer mixture comprising a monofunctional addition-polymerizable monomer and a polyfunctional addition-polymerizable monomer and a radical polymerization initiator are added to an aqueous medium, followed by stirring to prepare a suspension of the monomer mixture, which is then maintained at a polymerization temperature for a predetermined period of time to obtain a spherical crosslinked copolymer. As the polymerization initiator, an organic peroxide such as benzoyl peroxide, cumyl peroxide or lauroyl peroxide, or an azo compound such as azobisisobutylonitrile or azobisvaleronitrile, is commonly employed.

Ion exchange groups are introduced to such a crosslinked copolymer by a conventional method to obtain a spherical ion exchange resin. For example, a sulfonic acid type strongly acidic cation exchange resin can be obtained by reacting a sulfonating agent such as concentrated sulfuric acid, chlorosulfonic acid or fuming sulfuric acid to the crosslinked copolymer. Further, a weakly basic to strongly basic anion exchange resin can be obtained by haloalkylating the crosslinked copolymer by reacting chloromethyl methyl ether thereto in the presence of a Lewis acid, followed by reacting a primary to tertiary amine thereto.

One of problems with these methods is that when ion exchange groups are introduced to a spherical crosslinked copolymer, the spherical crosslinked copolymer is likely to break or undergo cracking.

One of methods for solving such a problem at the time of introducing ion exchange groups, is to conduct the introduction of ion exchange groups under a mild condition as far as possible to prevent formation of a substantial strain in the crosslinked copolymer. Another method is to produce a crosslinked copolymer having high strength, which is durable against a strain formed during the introduction of ion exchange groups. As such a method, a method of introducing oxygen to a polymerization atmosphere as disclosed in US Patent 4,192,921, or a method of employing a chain transfer additive as disclosed in GB Patent 2,244,713, may, for example, be mentioned.

US Patent 4,283,499 proposes a method of using a special polymerization initiator such as tert-butyl peroxy-2-ethylhexanoate. However, the physical or mechanical strength of the crosslinked copolymer obtainable by this method is not fully satisfactory although it is improved to some extent as compared with a case where a common initiator such as benzoyl peroxide is used. Namely, during the reaction for introducing various ion exchange groups in a state swelled with a solvent, many ion exchange resin particles will break due to physical swelling exerted to the crosslinked copolymer. Further, in an accelerated test wherein resin beads having ion exchange groups introduced are immersed alternately in highly concentrated acid and alkali aqueous solutions, the particles are likely to break.

WO 85/04885 discloses that resin beads having ion exchange groups introduced to a crosslinked copolymer produced by a so-called seed polymerization wherein while controlling the polymerization conversion of a monomer absorbed by seed particles, a monomer is further added, absorbed and polymerized, exhibit adequate strength against an accelerated test using highly concentrated acid and alkali aqueous solutions. However, this polymerization method is very cumbersome and has a problem that it is difficult to carry out such a method on an industrial scale.

It is an object of the present invention to obtain an ion exchange resin with adequate strength and good shape in good yield by preventing breakage or cracking of a spherical crosslinked copolymer during the introduction of ion exchange groups, by a relatively simple method of using a polymerization initiator having a certain specific chemical structure. Further, it is an object of the present invention to provide a method for producing an ion exchange resin having excellent physical strength, whereby it is possible to substantially reduce a deterioration under conditions of practical use, such as breakage due to swelling and contraction under acidic and alkaline conditions.

Thus, the present invention provides a method for producing a spherical crosslinked copolymer, which comprises polymerizing a monofunctional addition-polymerizable monomer and a polyfunctional addition-polymerizable monomer by suspension polymerization in an aqueous medium in the presence of a radical polymerization initiator of the following formula (a) or (b) which has a decomposition temperature for a half-life period of 10 hours within a range of from 60 to 120°C and which is capable of forming at least four radical initiating points per molecule by the decomposition: 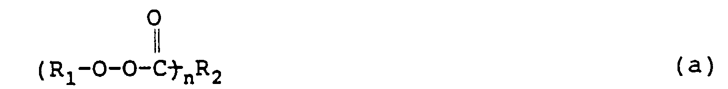 wherein R₁ is a linear or branched C₁₋₁₀ alkyl group, R₂ is a n-substituted C₄₋₁₅ hydrocarbon group, and n is an integer of at least 2, wherein the plurality of R₁ per molecule may be the same or different;

(R₄-O-O)̵ₘR₅ (b)

wherein R₄ is a linear or branched C₁₋₁₀ alkyl group, R₅ is a m-substituted C₄₋₂₅ hydrocarbon group, and m is an integer of at least 2, wherein the plurality of R₄ per molecule may be the same or different.

Now, the present invention will be described in detail with reference to the preferred embodiments.

The addition-polymerizable monomers to be used for the copolymerization in the present invention may be those commonly used in the field of ion exchange resins.

The monofunctional addition-polymerizable monomer may be an aromatic monomer such as styrene, vinyltoluene, ethylvinylbenzene or vinylnaphthalene, or an aliphatic monomer such as (meth)acrylic acid, a (meth)acrylate or a (meth)acrylamide. Likewise, the polyfunctional addition-polymerizable monomer may be an aromatic monomer such as divinylbenzene, divinyltoluene or other aromatic monomer having a C₁₋₃ alkyl group substituted on a benzene ring, or an aliphatic monomer such as di(meth)acrylate of ethylene glycol or diethylene glycol. It is most common to employ styrene and divinylbenzene. Further, divinylbenzene commonly available for industrial use may contain a substantial amount of ethylvinylbenzene.

The polyfunctional addition-polymerizable monomer is used usually in an amount of from 0.5 to 30% by weight, based on the total amount of monomers. The preferred amount is from 1 to 20% by weight based on the total amount of monomers.

As mentioned above, the polymerization initiator to be used in the present invention is a polyalkyl ester of a polybasic acid or a peroxyketal having a plurality of polymerization initiating points per molecule.

The integer n in the above formula (a) or the integer m in the above formula (b) is usually at least 2, preferably from 2 to 8, most preferably from 2 to 4. The larger the integer n or m is, the longer the molecular chain of the resulting copolymer (the molecular chain length from the initiating point to the terminating point) is expected, such being desirable to obtain the physical and mechanical strength. However, as the integer n or m increases, the solubility of the polymerization initiator to the monomers, decreases. Accordingly, n or m is most preferably 2. Further, the polymerization initiator to be used in the present invention has a decomposition temperature for a half-life period of 10 hours within a range of from 60 to 120°C, preferably from 70 to 110°C. If this temperature is high, polymerization is required to be carried out at a high temperature, whereby the energy efficiency tends to be poor. On the other hand, if this temperature is too low, the chemical stability of the polymerization initiator deteriorates, whereby the storage stability or the operational safety tends to be low.

The polymerization initiator in the present invention may be used alone or in combination as a mixture.

R₁ in the above formula (a) is a linear or branched C₁₋₁₀ alkyl group, preferably a branched C₃₋₁₀ alkyl group. The plurality of R₁ present in one molecule may be the same or different. R₂ is a n-substituted C₄₋₁₅ hydrocarbon group, preferably a n-substituted C₄₋₁₀ hydrocarbon group. The n-substituted C₄₋₁₀ hydrocarbon group may, for example, be a linear or cyclic C₄₋₁₀ alkylene group or a C₆₋₁₀ aromatic hydrocarbon group.

Here, "n-substituted" means that the hydrocarbon group is linkable with n number of

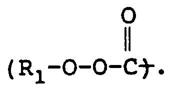

R₄ in the above formula (b) is a linear or branched C₁₋₁₀ alkyl group, preferably a branched C₃₋₁₀ alkyl group. The plurality of R₄ present in one molecule may be the same or different. R₅ is a m-substituted C₄₋₂₅ hydrocarbon group, preferably a m-substituted C₆₋₂₀ hydrocarbon group. The m-substituted C₆₋₂₀ hydrocarbon group may, for example, be a linear or cyclic C₆₋₂₀ alkylene group, a linear or cyclic C₆₋₂₀ alkylidene group, or a C₆₋₂₀ aromatic hydrocarbon group.

Here, "m-substituted" means that the hydrocarbon group is linkable with m number of (R₄-O-O)̵.

Specifically, the polymerization initiator of the formula (a) of the present invention may, for example, be a diester of a cyclohexane di-percarboxylic acid such as di-tert-butyl oxyhexahydroterephthalate (83°C), a diester of a chain di-percarboxylic acid which may have a branch, such as di-tert-butyl peroxyazelate or di-tert-butyl peroxytrimethyladipate, or a diester of isophthal diperacid such as di-tert-butyl peroxyisophthalate (107°C). On the other hand, the polymerization initiator of the formula (b) may, for example, be a bifunctional peroxyketal such as 1,1-di-tert-butyl peroxy-3,3,5-trimethylcyclohexane (90°C) or 1,1-di-tert-butyl peroxycyclohexane (91°C), 1,1-di-tert-butyl peroxy-2-methylcyclohexane, or a tetrafunctional peroxyketal such as 2_{,}2-bis(4,4-di-tert-butylperoxycyclohexyl)propane (92°C).

The numerical values in the above brackets indicate decomposition temperatures for a half-life period of 10 hours of the respective polymerization initiators. These polymerization initiators are commercially available, for example, from manufacturers such as Nippon Oil & Fats or KAYAKU AKZO CORPORATION.

Particularly preferred as the polymerization initiator among them, is a radical polymerization initiator of the following formula (c), and most preferred is di-tert-butyl peroxyhexahydroterephthalate (decomposition temperature for a half-life period: 83°C). 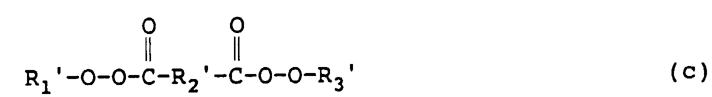 wherein each of R₁' and R₃' which are independent of each other, is a linear or branched C₁₋₁₀ alkyl group, and R₂' is a chain or cyclic C₄₋₁₀ alkylene group, or a C₆₋₁₀ aromatic hydrocarbon group.

The polymerization initiator is used usually in an amount of from 0.05 to 2% by weight to the polymerizable monomers.

The polymerization is carried out by adding a monomer mixture containing a polymerization initiator to an aqueous medium having a dispersant dissolved therein, followed by stirring to form a suspension, and then maintaining the suspension at a predetermined polymerization temperature. If necessary, the monomer mixture may be discharged in the form of slender columns into an aqueous medium to form uniform droplets of the monomer mixture, which are then subjected to polymerization.

Other dispersants may be those which are commonly employed, such as xanthane gum, polydiaryldimethyl ammonium chloride, polyacrylic acid or its salt, polyacrylamide, a hydrolyzate of a styrene-maleic anhydride copolymer or its salt, carboxy methyl cellulose, hydroxyalkyl cellulose, methyl cellulose, ethyl cellulose, polyvinyl alcohol, and gelatin. Further, if necessary, an alkali or a buffering salt such as a borate may be added to maintain the pH to a proper level. In a case where a water-soluble monomer such as acrylamide is used, it is preferred to add sodium chloride or calcium chloride to lower the water-solubility.

The volume ratio of the addition-polymerizable monomer mixture to the aqueous medium is usually from 1:10 to 1:2, and it is preferred to use the aqueous medium in a larger amount. Usually, the larger the ratio of the aqueous medium is, the more stable the suspension becomes.

The polymerization temperature is usually from 50 to 100°C. The polymerization temperature may be constant throughout the process. Otherwise, the polymerization may be initiated at a low temperature, and the temperature may gradually be raised.

To the spherical crosslinked copolymer obtained by the suspension polymerization as described above, ion exchange groups may then be introduced by any conventional method to obtain an ion exchange resin such as an anion exchange resin, a cation exchange resin, or a chelate resin.

A typical method for introducing ion exchange groups will be described. The crosslinked copolymer is swelled by an addition of a swelling agent such as dichloroethane and then a sulfonating agent such as concentrated sulfuric acid, chlorosulfonic acid or fuming sulfuric acid is reacted thereto to obtain a sulfonic acid type strongly acidic cation exchange resin. The temperature for the sulfonation reaction is usually from room temperature to 150°. The swelling agent may be a halogenated hydrocarbon such as dichloropropane or chloroform, or an aromatic compound such as benzene, toluene or nitrobenzene, in addition to the above-mentioned dichloroethane.

A strongly basic anion exchange resin can be obtained by reacting chloromethylmethyl ether for chloromethylation in the presence of a Lewis acid such as aluminum chloride or zinc chloride instead of the sulfonating agent, and then reacting a tertiary amine such as trimethylamine or dimethylethanolamine thereto. As the Lewis acid as a catalyst for the chloromethylation reaction, ferric chloride, boron trifluoride, titanium tetrachloride, stanic chloride or aluminum bromide may, for example, be used also. The Lewis acid is used usually in an amount of from 0.02 to 2 parts by weight per part by weight of the crosslinked copolymer. The chloromethylation reaction is carried out usually at a temperature of from 30 to 60°C for from 2 to 20 hours. For the amination of the chloromethyl groups, the amine is used in an amount of from 1 to 30 mols per mol of the chloromethyl groups introduced to the crosslinked copolymer.

As described above, it is possible to obtain ion exchange resin beads as the spherical ion exchange resin of the present invention by introducing functional groups to the spherical crosslinked copolymer of the present invention comprising at least repeating units derived from a monofunctional addition-polymerizable monomer and repeating units derived from a polyfunctional addition-polymerizable monomer.

Such resin beads have excellent physical and mechanical strength. For example, they are excellent in the osmotiction, particularly the physical swelling strength exerted to the crosslinked copolymer during the reaction for introducing various ion exchange groups in a state swelled with a solvent. Accordingly, it is possible to minimize the breakage or cracking of beads during the introduction of ion exchange groups, and thus it is possible to obtain crack-free ion exchange resin beads in good yield. The proportion of perfect beads is as high as at least 95%.

With the spherical ion exchange resin of the present invention, the proportion of ion exchange resin particles remaining as perfect beads (i.e. the retention of perfect bead shape) after a cycle test of contacting a 8N sulfuric acid aqueous solution and a 8N sodium hydroxide aqueous solution alternately to the spherical resin for 10 cycles, is at least 80%, preferably at least 85%.

The ion exchange resin of the present invention is scarcely susceptible to breakage even when subjected to regeneration and loading repeatedly, and thus is capable of minimizing an increase of pressure loss of the ion exchange resin bed.

When the resin beads having ion exchange groups introduced to the spherical crosslinked copolymer obtained by the present invention, are swelled with water, a difference in the distribution of the water content is observed between the peripheral portions and the center portions of the gel-like resin beads thus swelled. For example, when a dye having a large molecular weight and a large molecular volume is impregnated to the ion exchange resin obtained by the method of the present invention, a difference in the penetration rate to the interior of the gel is observed as compared with a commercially available resin having a relatively high strength. Namely, the spherical ion exchange resin of the present invention has a particle structure such that in a dyeing test of impregnating a dye to particles of the ion exchange resin, the particles are dyable at their peripheral portions and not dyable at their center portions. When the center portion to which the dye has not penetrated within a unit time, is defined as a core, and the peripheral portion dyed by the dye is defined as a shell, it is one of the features of the spherical ion exchange resin of the present invention that it comprises core and shell portions.

The dye to be used here, is selected depending upon the proportion of the polyfunctional addition-polymerizable monomer. When the charged proportion of the polyfunctional addition-polymerizable monomer is from 6 to 10% by weight, i.e. when the water content is from 40 to 55%, a dye having a molecular weight of about 500 is preferred.

According to the present invention, an ion exchange resin having very high strength and excellent spherical shape can easily be obtained. The ion exchange resin obtained by the present invention is scarcely susceptible to breakage even when subjected to regeneration and loading repeatedly, whereby it is possible to minimize an increase of pressure loss of the ion exchange bed.

Now, the present invention will be described in further detail with reference to Examples. However, it should be understood that the present invention is by no means restricted to such specific Examples. In the following Examples, "parts" means "parts by weight". Further, the particle sizes of the obtained crosslinked copolymers were about 0.5 mm.

### EXAMPLE 1

A monomer mixture comprising 84 parts of styrene, 16 parts of divinylbenzene for industrial use (purity: 55%), and 0.6 part of di-tert-butyl peroxyhexahydrophthalate, was added to 400 parts of deionized water having 0.5 parts of polyvinyl alcohol dissolved therein, followed by stirring for one hour to obtain a suspension. Then, the suspension was heated and reacted at 80°C for 8 hours. The resulting spherical crosslinked copolymer was thoroughly washed with water to remove the dispersant, followed by vacuum drying at 50°C for 5 hours. 40 parts of dichloroethane was added to 20 parts of the spherical crosslinked copolymer thus obtained, and the mixture was maintained at room temperature for one hour for swelling. Then, 240 parts of concentrated sulfuric acid was added thereto, and the mixture was reacted at 70°C for 8 hours. Then, 500 parts of deionized water was added thereto over a period of 5 hours to dilute concentrated sulfuric acid, followed by filtration. The sulfonic acid type strongly acidic cation exchange resin thus obtained, was heated to remove dichloroethane and then packed into a column, whereupon a 2N sodium hydroxide aqueous solution was permitted to flow therethrough. Then, purified water was permitted to flow for cleaning to obtain a Na-type strongly acidic cation exchange resin. The physical properties of this resin are shown in Table 1.

### EXAMPLE 2

Polymerization and sulfonation were carried out in the same manner as in Example 1 except that a monomer mixture comprising 92 parts of styrene, 8 parts of divinylbenzene for industrial use (purity: 55%) and 0.6 part of di-tert-butyl peroxyhexahydroterephthalate, was used, to obtain a strongly acidic cation exchange resin. The physical properties of this resin are shown in Table 1.

### COMPARATIVE EXAMPLE 1

Polymerization and sulfonation were carried out in the same manner as in Example 1 except that benzoyl peroxide was used instead of the di-tert-butyl peroxyhexahydroterephthalate, to obtain a strongly acidic cation exchange resin. The physical properties of this resin are shown in Table 1.

### COMPARATIVE EXAMPLE 2

Polymerization and sulfonation were carried out in the same manner as in Example 2 except that benzoyl peroxide was used instead of the di-tert-butyl peroxyhexahydroterephthalate, to obtain a strongly acidic cation exchange resin. The physical properties of this resin are shown in Table 1.

### COMPARATIVE EXAMPLE 3

Polymerization and sulfonation were carried out in the same manner as in Example 1 except that tert-butyl peroxy-2-ethylhexanoate was used instead of the di-tert-butyl peroxyhexahydroterephthalate, to obtain a strongly acidic cation exchange resin. The physical properties of this resin are shown in Table 1.

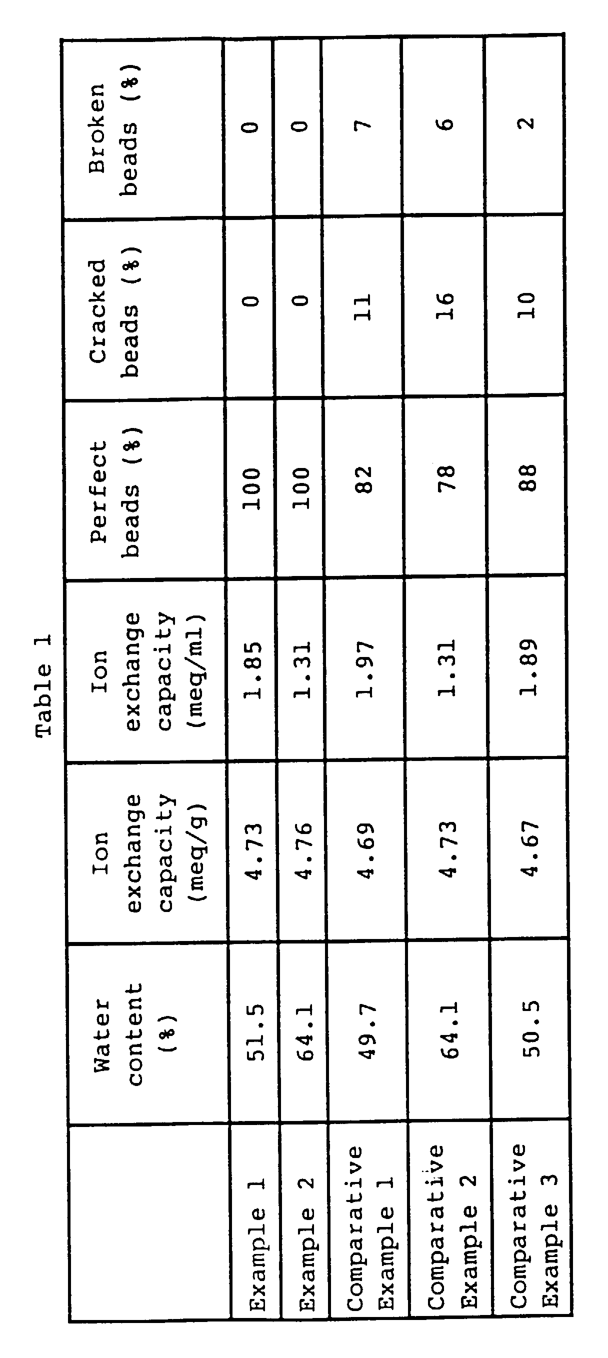

For the determination of the perfect beads, the cracked beads and the broken beads, each ion exchange resin was dispersed and a microscopic photograph (25 magnifications) was taken, whereupon the configuration of beads in an area containing about 300 particles was visually evaluated.

### EXAMPLE 3

The ion exchange resin obtained in Example 1 and commercially available typical strongly acidic cation exchange resins made of a styrene-divinylbenzene type resins having substantially the same level of water content i.e. Diaion® SKlB (water content: 46%), manufactured by Mitsubishi Kasei Corporation and Dowex® 650C (water content: 42%), manufactured by Dow Chemical Company were classified into particle sizes of from 610 µm to 700 µm, respectively, in the form of sodium salt, and 6 ml of each resin was sampled. Each sample was packed into a column and subjected to a cycle test of passing a 8N sulfuric acid aqueous solution and a 8N sodium hydroxide aqueous solution alternately therethrough for 10 cycles. The periods of time for passing liquids were as follows:

| | |
|---|---|
| 1) 8N sulfuric acid aqueous solution | 2 minutes |
| 2) Deionized water | 1 minute |
| 3) 8N sodium hydroxide aqueous solution | 2 minutes |
| 4) Deionized water | 1 minute |

The flow rate was a space velocity SV=5.

The proportions of the perfect beads, the cracked beads and the broken beads were compared as between before and after the test. The results are shown in Table 2.

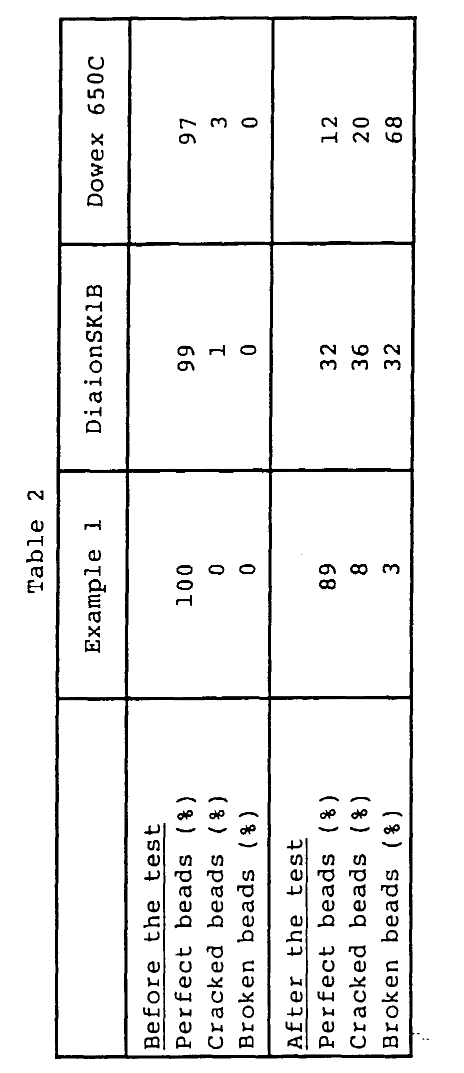

## Claims

1. A method for producing a spherical crosslinked copolymer, which comprises polymerizing a monofunctional addition-polymerizable monomer and a polyfunctional addition-polymerizable monomer by suspension polymerization in an aqueous medium in the presence of a radical polymerization initiator of the following formula (a) or (b) which has a decomposition temperature for a half-life period of 10 hours within a range of from 60 to 120°C and which is capable of forming at least four radical initiating points per molecule by the decomposition: 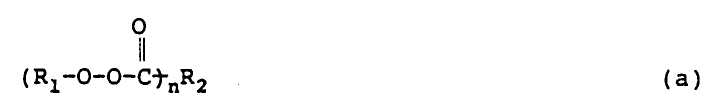 wherein R₁ is a linear or branched C₁₋₁₀ alkyl group, R₂ is a n-substituted C₄₋₁₅ hydrocarbon group, and n is an integer of at least 2, wherein the plurality of R₁ per molecule may be the same or different;
(R₄-O-O)̵ₘR₅ (b)
wherein R₄ is a linear or branched C₁₋₁₀ alkyl group, R₅ is a m-substituted C₄₋₂₅ hydrocarbon group, and m is an integer of at least 2, wherein the plurality of R₄ per molecule may be the same or different.

2. A method for producing a spherical ion exchange resin, which comprises introducing ion exchange groups to the spherical crosslinked copolymer produced by the method of Claim 1.

3. A method for producing a strongly acidic cation exchange resin according to Claim 2, wherein the ion exchange groups are sulfonic acid groups.

4. A method for producing a strongly acidic cation exchange resin according to Claim 3, which comprises reacting a sulfonating agent selected from the group consisting of concentrated sulfuric acid, sulfonic acid and fuming sulfuric acid to the spherical crosslinked copolymer produced by the method of Claim 1.

5. A method for producing a spherical anion exchange resin which comprises haloalkylating the spherical crosslinked copolymer produced by the method of Claim 1 by reacting a haloalkylating agent thereto in the presence of a Lewis acid, followed by reacting an alkylamine thereto.

6. A method for producing a spherical crosslinked copolymer according to Claim 1, wherein the radical polymerization initiator is the one represented by the following formula (c): 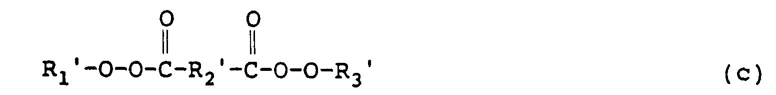 wherein each of R₁' and R₃' which are independent of each other, is a linear or branched C₁₋₁₀ alkyl group, and R₂' is a C₄₋₁₀ linear or cyclic alkylene group, or a C₆₋₁₀ aromatic hydrocarbon group.

7. A method for producing a spherical crosslinked copolymer according to Claim 1, wherein the polymerization initiator is at least one member selected from the group consisting of di-tert-butyl peroxyhexahydroterephthalate, di-tert-butyl peroxyazelate, di-tert-butyl peroxytrimethyladipate, di-tert-butyl peroxyisophthalate, 1,1-di-tert-butyl peroxy-3,3,6-trimethylcyclohexane, 1,1-di-tert-butyl peroxycyclohexane, 1,1-di-tert-butyl peroxy-2-methylcyclohexane, and 2,2-bis(4,4-di-tert-butyl peroxycyclohexyl)propane.

8. A method for producing a spherical crosslinked copolymer according to Claim 6, wherein the polymerization initiator is at least one member selected from the group consisting of di-tert-butyl peroxyhexahydroterephthalate, di-tert-butyl peroxyazelate, di-tert-butyl peroxytrimethyladipate, and di-tert-butyl peroxyisophthalate.

9. A method for producing a spherical crosslinked copolymer according to Claim 1, which comprises polymerizing a monofunctional addition-polymerizable monomer composed essentially of styrene and a polyfunctional monomer composed essentially of divinylbenzene by suspension polymerization in an aqueous medium in the presence of di-tert-butyl peroxyhexahydroterephthalate.

10. A spherical ion exchange resin made of a spherical crosslinked copolymer produced by the method of claim 1 and having ion exchange groups introduced to the spherical crosslinked copolymer, which resin has a retention of perfect bead shape of at least 80 % after a cycle test of contacting a 8N sulfuric acid aqueous solution and a 8N sodium hydroxide aqueous solution alternately to the spherical ion exchange resin for 10 cycles.

11. A spherical ion exchange resin according to Claim 10, wherein the retention of perfect bead shape is at least 85%.

12. A spherical cation exchange resin according to Claim 10 or 11, wherein the ion exchange groups are sulfonic acid groups.

## Patentansprüche

1. Verfahren zur Herstellung eines kugelförmigen, vernetzten Copolymeren, umfassend das Polymerisieren eines monofunktionellen, additionspolymerisierbaren Monomeren und eines polyfunktionellen, additionspolymerisierbaren Monomeren durch Suspensionspolymerisation in einem wäßrigen Medium in Gegenwart eines Radikalpolymerisationsinitiators der folgenden Formel (a) oder (b), der bei einer Halbwertszeit von 10 Stunden eine Zersetzungstemperatur innerhalb eines Bereichs von 60 bis 120°C aufweist und in der Lage ist, durch die Zersetzung mindestens 4 Radikalinitiierungspunkte pro Molekül zu bilden: 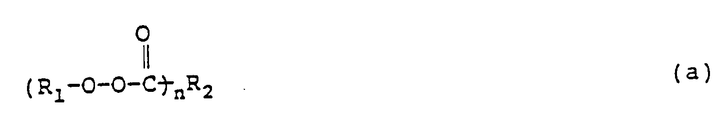 worin R₁ eine lineare oder verzweigte C₁₋₁₀-Alkylgruppe ist, R₂ eine n-substituierte C₄₋₁₅-Kohlenwasserstoffgruppe ist und n eine ganze Zahl von mindestens 2 ist, wobei die Vielzahl von R₁ pro Molekül gleich oder verschieden sein kann.
(R₄-O-O)̵ₘR₅ (b)
worin R₄ eine lineare oder verzweigte C₁₋₁₀-Alkylgruppe ist, R₅ eine m-substituierte C₄₋₂₅-Kohlenwasserstoffgruppe ist, und m eine ganze Zahl von mindestenss 2 ist, wobei die Vielzahl von R₄ pro Molekül gleich oder verschieden sein kann.

2. Verfahren zur Herstellung eines kugelförmigen Ionenaustauscherharzes, umfassend das Einführen von Ionenaustauschergruppen in ein nach Anspruch 1 hergestelltes, kugelförmiges, vernetztes Copolymer.

3. Verfahren zur Herstellung eines stark sauren Kationenaustauscherharzes nach Anspruch 2, wobei die Ionenaustauschergruppen Sulfonsäuregruppen sind.

4. Verfahren zur Herstellung eines stark sauren Kationenaustauscherharzes nach Anspruch 3, umfassend das Umsetzen eines Sulfonierungsmittels, gewählt aus der konzentrierte Schwefelsäure, Sulfonsäure und rauchende Schwefelsäure umfassenden Gruppe, mit dem nach dem Verfahren gemäß Anspruch 1 hergestellten, kugelförmigen, vernetzten Copolymer.

5. Verfahren zur Herstellung eines kugelförmigen Anionenaustauscherharzes, umfassend das Halogenalkylieren des nach dem Verfahren gemäß Anspruch 1 hergestellten, kugelförmigen, vernetzten Copolymeren durch Umsetzen eines Halogenalkylierungsmittels mit diesem in Gegenwart einer Lewis-Säure, und danach Umsetzen mit einem Alkylamin.

6. Verfahren zur Herstellung eines kugelförmigen. vernetzten Copolymeren nach Anspruch 1, wobei der Radikalpolymerisationsinitiator der folgenden Formel (c) entspricht: 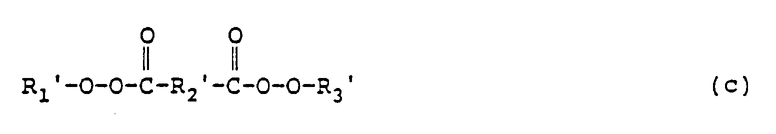 worin jedes R₁' und R₃', welche voneinander unabhängig sind, eine lineare oder verzweigte C₁₋₁₀-Alkylgruppe ist, und R₂' eine lineare oder cyclische C₄₋₁₀-Alkylengruppe oder eine aromatische C₆₋₁₀-Kohlenwasserstoffgruppe ist.

7. Verfahren zur Herstellung eines kugelförmigen. vernetzten Copolymeren nach Anspruch 1, wobei der Polymerisationsinitiator mindestens ein Vertreter ist, gewählt aus der Di-tert-butylperoxyhexahydroterephthalat, Di-tert-butylperoxyazelat, Di-tert-butylperoxytrimethyladipat, Di-tert-butylperoxyisophthalat, 1,1-Di-tert-butylperoxy-3,3,6-trimethylcyclohexan, 1,1-Di-tert-butylperoxycyclohexan, 1,1-Di-tert-butylperoxy-2-methylcyclohexan und 2,2-Bis(4,4-di-tert-butylperoxycyclohexyl)propan umfassenden Gruppe.

8. Verfahren zur Herstellung eines kugelförmigen, vernetzten Copolymeren nach Anspruch 6, wobei der Polymerisationsinitiator mindestens ein Vertreter ist, gewählt aus der Di-tert-butylperoxyhexahydroterephthalat, Di-tert-butylperoxyazelat, Di-tert-butylperoxytrimethyladipat und Di-tert-butylperoxyisophthalat umfassenden Gruppe.

9. Verfahren zur Herstellung eines kugelförmigen, vernetzten Copolymeren nach Anspruch 1, umfassend das Polymerisieren eines monofunktionellen, additionspolymerisierbaren Monomeren, das im wesentlichen aus Styrol zusammengesetzt ist, und eines polyfunktionellen Monomeren, das im wesentlichen aus Divinylbenzol zusammengesetzt ist, durch Suspensionspolymerisation in einem wäßrigen Medium in Gegenwart von Di-tert-butylperoxyhexahydroterephthalat.

10. Kugelförmiges Ionenaustauscherharz, das aus einem kugelförmigen, vernetzten Copolymeren, welches nach dem Verfahren gemäß Anspruch 1 erzeugt wurde, hergestellt ist, und in das kugelförmige, vernetzte Copolymer eingeführte Ionenaustauschergruppen aufweist, wobei das Harz eine Beibehaltung der perfekten Kugelform von mindestens 80% zeigt, nach einem Zyklustest des abwechselnden Kontaktierens des kugelförmigen Ionenaustauscherharzes mit einer wäßrigen 8N Schwefelsäurelösung und einer wäßrigen 8N Natriumhydroxidlösung über 10 Zyklen.

11. Kugelförmiges Ionenaustauscherharz nach Anspruch 10, wobei die Beibehaltung der perfekten Kugelform mindestens 85% beträgt.

12. Kugelförmiges Kationenaustauscherharz nach Anspruch 10 oder 11, wobei die Ionenaustauschergruppen Sulfonsäuregruppen sind.

## Revendications

1. Procédé de production d'un copolymère réticulé sphérique qui comprend la polymérisation d'un monomère monofonctionnel polymérisable par addition et d'un monomère polyfonctionnel polymérisable par addition, par polymérisation en suspension dans un milieu aqueux en présence d'un amorceur de polymérisation radicalaire de formule (a) ou (b) suivante, qui possède une température de décomposition pour une période de demi-vie de 10 heures comprise dans un intervalle allant de 60 à 120°C et qui est capable de former au moins quatre points d'amorçage radicalaire par molécule par la décomposition : 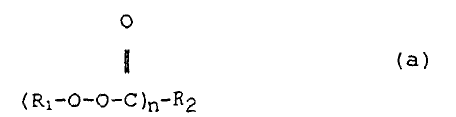 dans laquelle R₁ représente un groupe alkyle en C₁₋₁₀ linéaire ou ramifié, R₂ représente un groupe hydrocarboné en C₄₋₁₅ à n substituants et n est un nombre entier valant au moins 2, dans laquelle les groupes R₁ au nombre de plusieurs par molécule peuvent être identiques ou différents ;
(R₄-O-O)ₘ-R₅ (b)
dans laquelle R₄ représente un groupe alkyle en C₁₋₁₀ linéaire ou ramifié ; R₅ représente un groupe hydrocarboné en C₄₋₂₅ à m substituants et m est un nombre entier valant au moins 2, dans laquelle les R₄ au nombre de plusieurs par molécule peuvent être identiques ou différents.

2. Procédé de production d'une résine échangeuse d'ions sphérique, qui comprend l'introduction de groupes échangeurs d'ions dans le copolymère réticulé sphérique produit par le procédé selon la revendication 1.

3. Procédé de production d'une résine échangeuse de cations, fortement acide, selon la revendication 2, dans lequel les groupes échangeurs d'ions sont des groupes acide sulfonique.

4. Procédé de production d'une résine échangeuse de cations, fortement acide, selon la revendication 3, qui comprend la réaction d'un agent de sulfonation choisi dans le groupe constitué de l'acide sulfurique concentré, de l'acide sulfonique et de l'acide sulfurique fumant avec le copolymère réticulé sphérique produit selon le procédé de la revendication 1.

5. Procédé de production d'une résine échangeuse d'anions sphérique, qui comprend l'halogénoalkylation du copolymère réticulé sphérique produit selon le procédé de la revendication 1, en le faisant réagir avec un agent d'halogénoalkylation en présence d'un acide de Lewis, et ensuite en le faisant réagir avec une alkylamine.

6. Procédé de production d'un copolymère réticulé sphérique selon la revendication 1, dans lequel l'amorceur de polymérisation radicalaire est celui représenté par la formule (c) suivante : 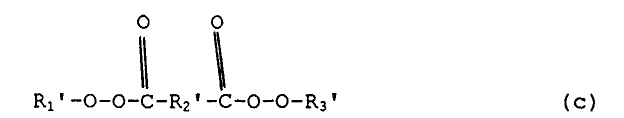 dans laquelle chacun de R₁' et R₃' qui sont indépendants l'un de l'autre, représente un groupe alkyle en C₁₋₁₀ linéaire ou ramifié et R₂' représente un groupe alkylène linéaire ou cyclique en C₄₋₁₀ ou un groupe hydrocarboné aromatique en C₆₋₁₀.

7. Procédé de production d'un copolymère réticulé sphérique selon la revendication 1, dans lequel l'amorceur de polymérisation est au moins un représentant choisi dans le groupe constitué par le peroxyhexahydrotéréphtalate de di-tert-butyle, le peroxyazélate de di-tert-butyle, le peroxy-triméthyladipate de di-tert-butyle, le peroxy isophtalate de di-tert-butyle, le 1,1-di-tert-butyl-peroxy-3,3,6-triméthylcyclohexane, le 1,1-di-tert-butyl-peroxy-cyclohexane, le 1,1-di-tert-butyl-peroxy-2-méthylcyclohexane et le 2,2-bis(4,4-di-tert-butyl-peroxycyclohexyl)propane.

8. Procédé de production d'un copolymère réticulé sphérique selon la revendication 6, dans lequel l'amorceur de polymérisation est au moins un représentant choisi dans le groupe constitué par le peroxyhexahydrotéréphtalate de di-tert-butyle, le peroxyazélate de di-tert-butyle, le peroxytriméthyladipate de di-tert-butyle et le peroxyisophtalate de di-tert-butyle.

9. Procédé de production d'un copolymère réticulé sphérique selon la revendication 1, qui comprend la polymérisation d'un monomère monofonctionnel polymérisable par addition constitué essentiellement de styrène et d'un monomère polyfonctionnel constitué essentiellement de divinylbenzène, par une polymérisation en suspension dans un milieu aqueux en présence de peroxyhexahydrotéréphtalate de di-tert-butyle.

10. Résine sphérique échangeuse d'ions faite d'un copolymère réticulé sphérique produit selon le procédé de la revendication 1 et possédant des groupes échangeurs d'ions introduits dans le copolymère réticulé sphérique, qui possède une conservation de forme de perles parfaite d'au moins 80 % après un essai en cycles de mise en contact d'une solution aqueuse d'acide sulfurique 8N et d'une solution aqueuse d'hydroxyde de sodium 8N alternativement avec la résine sphérique échangeuse d'ions pendant 10 cycles.

11. Résine sphérique échangeuse d'ions selon la revendication 10, dans laquelle la conservation de forme de perles parfaite est d'au moins 85 %.

12. Résine sphérique échangeuse de cations selon la revendication 10 ou 11, dans laquelle les groupes échangeurs d'ions sont des groupes acide sulfonique.
